(19) **Europäisches Patentamt**
**European Patent Office**
**Office européen des brevets**

(11) **EP 2 626 988 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **13154122.9**

(22) Anmeldetag: **06.02.2013**

(51) Internationale Patentklassifikation (IPC):
**H02K 15/02** *(2006.01)* **H02K 19/10** *(2006.01)*

(52) Gemeinsame Patentklassifikation (CPC):
**H02K 15/02; H02K 19/103**

(54) **Herstellungsverfahren für einen Rotor sowie Rotor**

Manufacturing method for a rotor and rotor

Procédé de fabrication d'un rotor et rotor

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2012 DE 102012202019**

(43) Veröffentlichungstag der Anmeldung:
**14.08.2013 Patentblatt 2013/33**

(73) Patentinhaber: **KSB SE & Co. KGaA 67227 Frankenthal (DE)**

(72) Erfinder:
• **Bosbach, Franz Gerhard 67251 Freinsheim (DE)**
• **Gontermann, Daniel 67227 Frankenthal (DE)**
• **Könen, Michael 64625 Bensheim (DE)**

(56) Entgegenhaltungen:
**EP-A2- 0 596 353 DE-A1- 2 443 281 JP-A- 2002 100 522 JP-A- 2008 109 800**

**Beschreibung**

Die Erfindung betrifft ein Verfahren zur Herstellung eines Rotors für eine Synchron-Reluktanzmaschine sowie einen Rotor für eine Reluktanzmaschine.

Üblicherweise werden Rotoren für Synchron-Reluktanzmaschinen mit einem zylinderförmigen weichmagnetischen Element ausgestattet, das koaxial auf der Rotorachse angeordnet wird. Zur Ausbildung mindestens eines Polpaares bzw. Lückenpaares umfasst das weichmagnetische Element Flussleit- sowie Flusssperrabschnitte, die sich voneinander in einer unterschiedlich stark ausgeprägten magnetischen Permeabilität unterscheiden. Der Abschnitt mit großer magnetischer Leitfähigkeit verläuft dabei bekannterweise durch die d-Achse des Rotors und der Abschnitt mit vergleichsweise geringerer Leitfähigkeit durch die q-Achse des Rotors. Ein optimaler Wirkungsgrad des Reluktanzmotors stellt sich dann ein, wenn während des Betriebs die d-Achse eine möglichst große magnetische Leitfähigkeit und die q-Achse eine möglichst niedrige magnetische Leitfähigkeit aufweist.

Derartige Rotoren basieren regelmäßig auf einem Blechpaket, das sich aus einer Vielzahl von aufeinander gestapelten Elektroblechen zusammensetzt, die jeweils eine spezifische Blechschnittgeometrie mit Flussleit- und Flusssperrabschnitten aufweisen.

Die Herstellung der Rotoren für Synchron-Reluktanzmaschinen erfolgt derzeit per Laserschnitt bzw. Stanzverfahren, wobei aus, eventuell mit Isolierlack beschichteten, Elektroblech ein oder mehrere Aussparungen zur Realisierung sogenannter Flusssperren geschnitten bzw. gestanzt werden. Dies verleiht dem späteren Blechpaket seine notwendige anisotrope Eigenschaft um nach dem sogenannten Reluktanzprinzip arbeiten zu können.

Primäres Ziel bei der Rotorkonstruktion ist stets, dass der Rotor in genau definierten Richtungen einen höheren (Luftschlitze) bzw. niedrigeren (Eisen) magnetischen Widerstand (Reluktanz) aufweist.

Die EP 0 596 353 A2 offenbart ein Verfahren zur Herstellung von mit Vorzugsrichtungen magnetisierbaren Körpern. Die JP 2008 109800 A sowie die JP 2002 100522 offenbaren einen Reluktanzmotor und ein Herstellverfahren für einen solchen Reluktanzmotor. Die DE 24 43 281 A1 offenbart einen lamellierten Magnetkern für Wechselstromgeräte sowie ein Verfahren zu seiner Herstellung.

Der Grundgedanke der vorliegenden Erfindung liegt in dem Aufzeigen eines alternativen Herstellungsverfahrens, das den vergleichsweise hohen Fertigungsaufwand beim Ausstanzen bzw. Laserschneiden der einzelnen Elektrobleche und der nachfolgenden Zusammensetzung zu Blechpaketen umgeht. Die technische Aufgabe setzt sich zudem mit dem Auffinden eines kostengünstigeren Herstellungsverfahrens auseinander, das nicht nur die anfallenden Produktionskosten der Rotoren minimiert sondern zugleich deren Leistungsfähigkeit und Effizienz im Motorbetrieb steigert.

Diese Aufgabe wird durch das Verfahren gemäß den Merkmalen des Anspruchs 1 gelöst. Demnach wird in einem ersten Schritt eine magnetisch nichtleitende Grundmasse verwendet, die mit magnetisch leitenden Partikeln versetzt wird. In einem zweiten nachfolgenden Verfahrensschritt wird eine Ausrichtung der einzelnen Partikel innerhalb der Zusammensetzung bewirkt, indem ein durch die Grundmasse verlaufendes magnetisches Feld angelegt wird. Der Feldverlauf bestimmt eine geeignete Ausrichtung der Partikel, wodurch sich ein oder mehrere magnetische Polpaare am Rotorkörper ausprägen, die dem Rotor im Rotorbetrieb die erforderliche Vorzugsrichtung verleihen (Reluktanzprinzip).

Die verwendete Grundmasse kann eine präpolymere und bzw. oder eine polymere Grundmasse sein. Besonders geeignet ist die Verwendung eines Thermoplasts bzw. eines Duromers, wie beispielsweise Harz.

Die magnetisch leitenden Partikel können beispielsweise Eisenpulver sein.

Im Gegensatz zum Stand der Technik besteht der nach dem erfindungsgemäßen Verfahren hergestellte Rotor nicht aus Blechpaketen, sondern aus einer zunächst homogenen Grundmasse, die mit ferromagnetischen Partikeln versetzt wird. Das resultierende elektrisch nicht leitende Compound besteht zunächst aus nicht geordneten amagnetischen und ferromagnetischen Anteilen.

Unter Anlegen eines äußeren, vorzugsweise eines $2 \cdot n$ poligen Magnetfeldes erhält die Grundmasse die notwendige anisotrope Eigenschaft. Das erfindungsgemäße Herstellungsverfahren ermöglicht eine Rotorproduktion ohne Verwendung von paketierten Elektroblechen, wobei die produzierten Rotoren trotz geringerer Wirbelstromverluste dennoch die erforderlichen anisotropen Eigenschaften aufweisen.

Die verwendeten magnetisch leitenden Partikel richten sich nach dem Verlauf des angelegten Magnetfeldes aus, wobei diese im Idealfall den Feldlinien des Magnetfeldes folgen. Dies kann durch das vorherige Einbringen von Taschen begünstigt werden. Die Taschen trennen definierte Bereiche ab, in denen eine Häufung der Partikel gewünscht wird.

Zweckmäßig ist die Verwendung einer niederviskosen Grundmasse, was das Einfüllen und die Ausrichtung der Partikel vereinfacht.

Erfindungsgemäß reihen sich mehrere Partikel sequentiell zu einer Kette hintereinander ein. Im späteren Rotorbetrieb verläuft der magnetische Fluss des angelegten Magnetfeldes zum Betrieb der Synchron-Reiuktanzmaschine durch die aus mehreren Partikeln zusammengesetzten Ketten.

Beispielsweise werden durch das Magnetfeld eine oder mehrere Ketten entlang der d-Achse des Rotors gebildet, wohingegen sich entlang der q-Achse keine bzw. nur vergleichsweise wenig Partikel befinden.

Parallel zueinander laufende Ketten sind vorzugsweise gegeneinander isoliert, wodurch Wirbelströme im Rotor, vorzugsweise in Rotorlängsachsenrichtung, verhindert werden. Die Partikel sind dabei lateral isoliert.

Ein oder mehrere Partikel sind vorzugsweise im Verhältnis

$$\frac{l}{D} \geq 5$$

aufgebaut, wobei l die Partikellänge und D die Partikelbreite beschreibt. Hierdurch wird eine optimale Ausrichtung der Partikel gefördert.

Erfindungsgemäß vorgesehen ist die Anfertigung der Partikel aus einem isolierten Draht, der in vorzugsweise identische Drahtsegmente zerschnitten wird, die der Grundmasse beigemengt werden. Denkbar ist die Wicklung des Drahtes auf einen Wicklungskörper, insbesondere einen Spulenkörper, der automatisiert abgewickelt und in passende Drahtsegmente zerschnitten wird, die der Grundmasse beigemengt werden. Je nach Bedarf und Größe des herzustellenden Rotors bzw. der herzustellenden Synchron-Reluktanzmaschine wird die Partikelgröße und Partikelanzahl definiert.

Der Draht ist zweckmäßig vollumfänglich isoliert, wobei die Isolationsschicht im günstigsten Fall eine Bindung mit der Grundmasse eingeht. Durch den Schnittprozess entstehen an den Schnittkanten nicht isolierte Drahtflächen.

Die Grundmasse kann beispielsweise nach dem Ausrichten der einzelnen Partikel ausgehärtet werden. Dies kann beispielsweise unter Zuführung eines Aktivators, insbesondere eines chemischen Aktivators, Zu- oder Abführung von Energie, beispielsweise in Form von Licht, insbesondere UV-Licht, oder Wärme, erfolgen. Alternativ kann als Aktivator auch ein äußeres Magnetfeld dienen, welches in einem späteren Arbeitsschritt angelegt wird. Bis zu diesem Zeitpunkt bleibt die Grundviskosität der Grundmasse, die das Ausrichten der einzelnen Partikel erlaubt, bestehen.

Die Grundmasse kann beispielsweise bereits mit dem Aktivator angerührt werden. Unter gewissen Bedingungen wird die Polymerbildung, beispielsweise die Polykondensation und bzw. oder die Polymerisation, angeregt. Die Reaktion kann stufenweise oder als Kettenreaktion ablaufen.

Um die gewünschte Rotorform zu erhalten - beispielsweise eine analoge Ausführung zu bekannten Blechpaketen - wird die Grundmasse vor dem Ausrichten der Partikel in eine passende Rotorform gegossen. Insbesondere ist die Rotorform zylindrisch und hohl ausgestaltet. Es ist jedoch jede beliebige dreidimensionale geometrische Ausgestaltung der Rotorform vorstellbar.

Die Partikel können der Grundmasse vor dem Einfüllen, während des Einfüllens oder auch nach dem Einfüllen der Grundmasse in die Rotorform beigegeben werden.

Erfindungsgemäß wird wenigstens ein Platzhalter vor dem Einfüllen der Grundmasse in die Rotorform eingebracht, der beispielsweise zur Ausprägung einer Aussparung innerhalb des Grundkörpers für die spätere Motorwelle dient. Alternativ kann noch vor dem Eingießen der Masse die spätere Motorwelle oder eine Hilfswelle in die Rotorform eingebracht werden.

Zusätzlich können ein oder mehrere Barrieren in die Form eingebracht werden, welche eine räumliche Konzentrationsdivergenz der Partikel innerhalb der Grundmasse ermöglichen. Insbesondere kann eine Konzentrationsdifferenz erreicht werden, indem ein Flüssigkeitsanteil mit keinen oder verhältnismäßig wenigen Partikeln mit wenigstens einer Barriere von einem Flüssigkeitsanteil mit höherer Partikeldichte abgetrennt wird. Ein oder mehrere verwendete Barrieren können nach dem Aushärten des Rotors in der Rotorform zurückbleiben oder als fester Bestandteil des Rotors in dem ausgehärteten Grundkörper verbleiben.

Die eingebrachten Barrieren sind bevorzugt aus amagnetischem Material gefertigt, wobei insbesondere wenigstens ein Teil der Barrieren geschäumt werden kann. Die geschäumten Barrieren weisen eine geringere Trägheit auf, was die Laufeigenschaften des Rotors fördert. Zudem können ein oder mehrere Barrieren mit einer metallischen Beschichtung versehen werden, um die resultierende Flussführung im Rotor zu verbessern.

Zur zusätzlichen Stabilisierung der Rotorkonstruktion kann die Grundmasse zudem mit Glasfasern bzw. einem Faser-Kunststoff-Verbund (GFK) versetzt werden.

Die Erfindung betrifft des Weiteren einen Rotor für eine Synchron-Reluktanzmaschine gemäß den Merkmalen des Anspruchs 8. Die vorzugsweise zylindrische Rotorform wird im Gegensatz zum Stand der Technik nicht aus einer Vielzahl von gestapelten Blechpaketen gebildet, sondern der Rotor besteht statt dessen aus einem einheitlichen magnetisch nichtleitenden Grundkörper aus einer präpolymeren und bzw. oder polymeren Masse.

Als besonders zweckmäßig erweist sich eine niederviskose Grundmasse. Möglich ist der Einsatz von Duromeren, wie beispielsweise diverse Harzsorten, oder auch von Thermoplasten, die unter bestimmten Temperaturbedingungen eine entsprechende niedrige Viskosität für die Ausrichtung der Partikel aufweisen.

Ein oder mehrere Partikel sind ferromagnetisch, vorzugsweise eisenhaltig. Die Verwendung von zerschnittenen Drahtsegmenten ist erfindungsgemäß.

Die verwendete Masse ist erfindungsgemäß mit magnetisch leitenden Partikeln versetzt, die derart ausgerichtet sind, so dass der Rotor durch eine gerade Anzahl von Polen geprägt wird. Vorzugsweise beträgt der Anteil der magnetisch leitenden Partikel zwischen 70 und 90 Prozent der gesamten Grundmasse.

Es ergeben sich unterschiedliche Permeabilitäten der Rotorstruktur entlang gewisser Rotorachsen, um einen effizienten Rotorbetrieb nach dem Reluktanzprinzip zu gestatten. Diese erfindungsgemäße Anordnung und Ausrichtung der magnetisch leitenden Partikel führt zu magnetisch leitenden sowie magnetisch nichtleitenden Bereichen, die im allgemeinen Fachterminus als q- und d-Achse bezeichnet werden.

In einer besonders vorteilhaften Ausführung des erfindungsgemäßen Rotors wird dieser nach einer bevorzugten Ausführungsvariante des vorgestellten erfindungsgemäßen Herstellungsverfahrens gefertigt. Die Vorteile und Eigenschaften des erfindungsgemäßen Verfahrens lassen sich offensichtlich auf den erfindungsgemäßen Rotor übertragen, weshalb an dieser Stelle auf eine erneute Erläuterung verzichtet wird.

Die einzelnen Drahtsegmente sind erfindungsgemäß isoliert, insbesondere vollumfänglich in Längsachsenrichtung, wobei die Querschnitts- bzw. Schnittflächen der Drahtsegmente zumindest teilweise keine Isolierung aufweisen. Die geometrische Ausgestaltung ein oder mehrerer Partikel ist möglicherweise quader- bzw. zylinderförmig, wobei diese in Längsrichtung isoliert und lediglich an den stirnseitigen Schnittflächen nicht isolierte Abschnitte aufweisen. Dies kann durch Inkompatibilität der Schnittflächen zur Masse begünstigt werden.

Die einzelnen Partikel sind derart angeordnet, so dass zwei oder mehrere Partikel über ihre ideal magnetisch leitenden Teilflächen, also über ihre nicht isolierten Schnittflächen zu Partikelketten verbunden sind. Mehrere gebildete Ketten sind aufgrund der übrigen Isolierung der Partikel gegeneinander isoliert.

Die Erfindung betrifft des Weiteren eine Synchron-Reluktanzmaschine mit einem Rotor gemäß einer der voranstehenden vorteilhaften Ausführungsformen. Die Vorteile und Eigenschaften der Synchron-Reluktanzmaschine decken sich offensichtlich mit den voranstehenden Ausführungen.

Weitere Merkmale und Einzelheiten der Erfindung sollen im Folgenden anhand mehrerer graphischer Darstellungen erläutert werden. Es zeigen:

Figur 1:    eine perspektivische schematische Darstellung eines einzelnen Partikels und

Figur 2:    eine Skizzierung einer Rotorform zur Herstellung des erfindungsgemäßen Rotors.

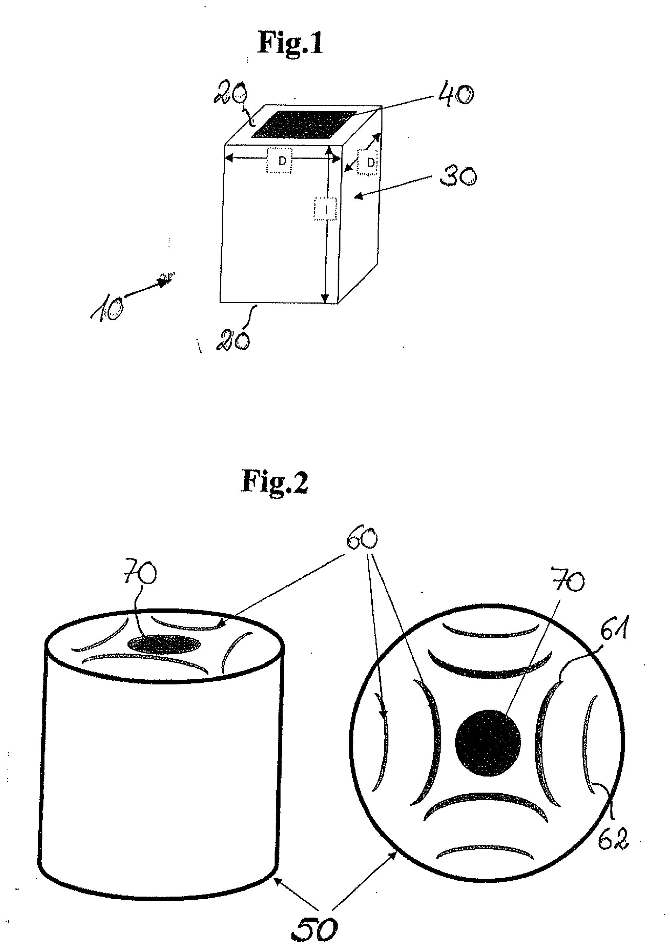

Figur 1 soll die Zusammensetzung eines einzelnen Partikels verdeutlichen. Das dargestellte Partikel 10 weist eine quaderförmige Struktur mit einem ferromagnetischen Kern 40 auf. Der optimal leitende Kern 40 besteht vorzugsweise aus Eisen bzw. einem eisenhaltigen Material, das ihm optimale ferromagnetische Eigenschaften verleiht.

Der optimal magnetisch leitende Kern 40 ist über die Länge I vollumfänglich durch eine Isolationsschicht 30 umgeben. Die Endflächen 20, d. h. die Stirnseiten des quaderförmigen Partikels 10 sind quadratisch und deckungsgleich. Alle Seitenflächen des Partikels 10 bilden Rechtecke und sind mit der Seitenlänge I sowie

der Breite D dimensioniert. Die geometrische Abmessung der Partikel 10 ist identisch, wobei das Seitenverhältnis stets nach der Vorgabe

$$\frac{l}{D} \geq 5$$

festgelegt ist. Die konkreten Werte für die Länge I sowie die Breite D werden in Abhängigkeit des zu fertigenden Rotortyps bzw. Größe und Aufgabe der Synchron-Reluktanzmaschine bestimmt. Auch die Gesamtanzahl der Partikel in der Grundmasse wird abhängig vom Rotortyp festgelegt.

Die Partikel werden beispielsweise aus isoliertem Draht gefertigt, der während der Durchführung des erfindungsgemäßen Herstellungsverfahrens in gleichgroße Partikel 10 zerschnitten wird. Demnach ist der ferromagnetischen Kern 40 an den entstehenden Schnitt- bzw. Stirnflächen 20 nicht isoliert und die Partikel 10 können in einer Grundmasse zu einer magnetisch leitfähigen Kette zusammengeführt werden.

Figur 2 zeigt eine perspektivische Seitenansicht sowie eine Draufsicht auf eine geeignete Rotorform 50 zur Ausführung des erfindungsgemäßen Verfahrens. Die Rotorform 50 ist ein zylindrischer hohler Behälter, in den eine niedrigviskose Grundmasse, insbesondere ein Harz, eingefüllt wird. Die Rotorform 50 entspricht der gewünschten finalen Rotorstruktur für einen Rotor zum Einsatz in einer Synchron-Reluktanzmaschine.

Entlang der Zylindermittelachse der Rotorform erstreckt sich die zukünftige Rotorwelle 70, um die das niedrigviskose Harz gegossen wird. Zudem werden vor dem Eingießen des Harzes mehrere Barrieren 60 im Hohlraum der Rotorform 50 installiert, um eine bestimmte Konzentrationsverteilung der Partikel 10 innerhalb der niedrigviskosen Masse zu erreichen. Insbesondere soll eine Unterteilung des eingegossenen Harzes in Anteile mit geringer bzw. keiner Partikeldichte und in Anteile mit vergleichsweise hoher Partikeldichte erzielt werden.

Die eingesetzten Barrieren 60 haben eine bogenförmige Querschnittsfläche und erstrecken sich der Länge nach parallel zur Motorwelle 70 durchgehend bis zum Boden der Rotorform 50. Die eingesetzten Barrieren können um den Winkel ca. 1 Statornut in axialer Richtung verschränkt bzw. verdrillt eingebracht werden.

Die rechte Darstellung der Figur 2 zeigt eine Draufsicht auf die Rotorform 50. Ersichtlich sind insgesamt acht Barrieren 60, die sich in genau vier große 61 und vier kleinere Barrieren 62 unterteilen lassen. Ein Barrierenpaar setzt sich aus einer großen 61 und einer kleinen Barriere 62 zusammen, die in radialer Richtung stets mit gleichem Abstand zueinander versetzt angeordnet sind. Die gebildeten Barrierenpaare liegen zueinander um 90° um die Rotorachse bzw. Rotorwelle 70 verdreht.

Um einen möglichst automatisierten Verfahrensablauf zu ermöglichen, wird ein auf einen Spulenkörper aufgewickelter Draht verwendet, der in entsprechende Partikel 10 gemäß Figur 1 geschnitten und mit dem Harz vermengt wird. Das verwendete Material der Isolierungsschicht geht im optimalen Fall eine Verbindung mit dem niedrigviskosen Harz ein. Das Compound aus Harz und Drahtpartikeln bzw. gegebenenfalls sonstigen Bestandteilen wird in die dargestellte Rotorform 50 gegossen.

Nach dem Einfüllen in die Rotorform 50 wird diese mit einem sehr starken $2 \cdot n$ poligen Magnetfeld, beispielsweise mit einem vierpoligen Magnetfeld, von außen durchsetzt. Die einzelnen Partikel 10 orientieren sich zumindest teilweise am Verlauf der Magnetfeldlinien, wobei sich einzelne Partikel 10 zu Partikelketten zusammensetzen. Der Zusammenschluss von wenigstens zwei Partikeln erfolgt über ihre nicht isolierten Schnittkanten 20, die folglich eine magnetisch leitende Verbindung miteinander eingehen. Die Ketten bilden demnach die Leiterbahnen, durch die im späteren Motorbetrieb ein magnetischer Fluss im Rotor ermöglicht wird. Die Isolationsschicht 30 der einzelnen Partikel 10 verhindert den Magnetfluss zwischen den einzelnen Ketten, wodurch insbesondere in Rotorlängsrichtung mögliche magnetische Wirbelströme vermieden werden.

Die Prozessvorbereitung bzw. der Aushärtungsprozess hängt von der verwendeten Grundmasse ab. Bei der Verwendung eines Thermoplasts als Grundmasse muss diesem ausreichend Wärmeenergie zugeführt werden, um die benötigte Viskosität zu erreichen. Erst im Anschluss kann der Thermoplast mit den Partikeln 10 versetzt und durch Ausformen in die gewünschte Rotorgeometrie gebracht werden. Nach dem Ausrichten der Partikel 10 kühlt das Thermoplast ab und die Ausrichtung der Partikel 10 wird beibehalten.

Wird ein Duromer, beispielsweise ein Harz, als Grundmasse eingesetzt, kann beispielsweise während dem Einmischen der Partikel bereits ein chemischer Aktivator beigemengt werden. Die in die Rotorform 50 eingegossene niedrigviskose Grundmasse erstarrt innerhalb einer bestimmten Zeit, beispielsweise nach 10 bis 15 Minuten.

Wird dem Duromer, insbesondere Harz, kein Aktivator beigemengt, kann ein Härten der Grundmasse auch durch das Anlegen des Magnetfeldes oder eines zusätzlichen Magnetfeldes angeregt werden. Jedoch verbleibt genügend Zeit für das Ausrichten der Partikel 10, bevor die Masse erstarrt und die Partikel in der ausgerichteten Position verbleiben. Alternativ kann der Härtungsprozess auch durch Wärmezufuhr bzw. Lichtzufuhr ausgelöst werden.

Der resultierende Rotor ist für den Einsatz bei Temperaturen zwischen -20°C und +155°C geeignet. Ein weiterer Vorteil des Verfahrens besteht darin, dass die resultierende Rotorform durch die Möglichkeit des Giessens eines Duromers bzw. der Formung eines Thermoplasts keinen Beschränkungen unterliegt. Neben einer beliebig variablen Baulänge lässt sich jede beliebige geometrische Rotorform produzieren. Zudem kann durch Variation des Füllgehaltes an leitenden Partikeln einfach auf die resultierenden Rotoreigenschaften eingegangen werden.

**Patentansprüche**

1. Verfahren zur Herstellung eines Rotors für eine Synchron-Reluktanzmaschine, wobei in einem ersten Schritt eine magnetisch nichtleitende präpolymere oder polymere Grundmasse mit magnetisch leitenden Partikeln (10) versetzt wird und in einem zweiten Schritt durch Anlegen eines magnetischen Feldes die Partikel (10) ausgerichtet werden um wenigstens ein magnetisches Polpaar zu erzeugen, wobei die Grundmasse sowie die Partikel (10) vor dem Anlegen des Feldes in eine Rotorform (50), insbesondere in eine zylindrische oder eckige Rotorform (50), gefüllt werden, wobei wenigstens ein Platzhalter bzw. die spätere Motorwelle (70) oder eine Hilfswelle vor dem Befüllen der Rotorform (50) in diese eingebracht werden,
**dadurch gekennzeichnet, dass**
ein oder mehrere Partikel (10) aus einem isolierten Draht gefertigt werden, wobei der Draht in Drahtsegmente zerschnitten wird, wodurch sich Partikel (10) mit nichtisolierten Schnittflächen (20) bilden, welche der Grundmasse beigemischt werden, so dass sich bei Anlegen des magnetischen Feldes ein oder mehrere magnetisch leitende Ketten aus mehreren Partikeln (10) bilden.

2. Verfahren nach Anspruch 1, **dadurch gekennzeichnet, dass** die Grundmasse ein Thermoplast oder ein Duromer ist.

3. Verfahren nach einem der vorhergehenden Ansprüche, wobei ein mehrpoliges Magnetfeld, bevorzugt mit einer geraden Anzahl an Polen, besonders bevorzugt mit vier Polen, angelegt wird.

4. Verfahren nach Anspruch 1, 2 oder 3, wobei die Ketten gegeneinander isoliert in der Grundmasse ausgerichtet werden.

5. Verfahren nach einem der vorhergehenden Ansprüche, wobei der Draht in Drahtsegmente mit einem Seitenverhältnis von $\dfrac{l}{D} \geq 5$ zerschnitten wird.

6. Verfahren nach einem der vorhergehenden Ansprüche, wobei der Aushärtungsprozess der Grundmasse durch Hinzufügen eines Aktivators und/oder Anlegen eines Magnetfeldes und/oder Zu- bzw. Abführung von Energie, beispielsweise in Form von Licht oder Wärme, angeregt wird.

7. Verfahren nach einem der vorangegangenen Ansprüche, wobei ein oder mehrere Barrieren (60, 61, 62) vor dem Befüllen der Rotorform (50) in diese eingebracht werden, die gegebenenfalls in der ausgehärteten Rotormasse verbleiben.

8. Rotor für eine Synchron-Reluktanzmaschine, wobei der Rotor aus einer magnetisch nicht leitenden präpolymeren oder polymeren Grundmasse besteht, die mit magnetisch leitenden Partikeln (10) versetzt ist, **dadurch gekennzeichnet, dass** der Rotor nach einem Verfahren gemäß einem der Ansprüche 1 bis 7 hergestellt ist.

9. Rotor nach Anspruch 8, **dadurch gekennzeichnet, dass** die Grundmasse ein Thermoplast oder ein Duroplast ist, beispielsweise ein Harz, und ein oder mehrere Partikel aus Eisen oder eisenhaltigen Material sind.

10. Rotor nach Anspruch 9, **dadurch gekennzeichnet, dass** die Partikel (10) in Längsrichtung isoliert und an den stirnseitigen Endflächen (20) nicht isoliert sind.

**Claims**

1. Method for producing a rotor for a synchronous reluctance machine, wherein, in a first step, a magnetically non-conductive, prepolymeric or polymeric base compound is interspersed with magnetically conductive particles (10), and, in a second step, the particles (10) are aligned by applying a magnetic field in order to create at least one magnetic pole pair, wherein the base compound and the particles (10) are filled into a rotor mould (50), in particular into a cylindrical or square rotor mould (50), before the field is applied, wherein at least one placeholder, or the later motor shaft (70), or an auxiliary shaft is introduced into the rotor mould (50) before it is filled, **characterized in that** one or more particles (10) are manufactured from an insulating wire, wherein the wire is cut up into wire segments, as a result of which particles (10) form that have non-insulated cut surfaces (20) and are mixed into the base compound, and therefore one or more magnetically conductive chains of multiple particles (10) form when the magnetic field is applied.

2. Method according to Claim 1, **characterized in that** the base compound is a thermoplastic or a thermoset.

3. Method according to either of the preceding claims, wherein a multi-pole magnetic field, preferably with an even number of poles, particularly preferably with four poles, is applied.

4. Method according to Claim 1, 2 or 3, wherein the chains are aligned in the base compound in a manner insulated from one another.

5. Method according to one of the preceding claims, wherein the wire is cut up into wire segments with a side ratio of $\dfrac{1}{D} \geq 5$ .

6. Method according to one of the preceding claims, wherein the curing process of the base compound is excited by adding an activator and/or applying a magnetic field and/or supplying/discharging energy, for example in the form of light or heat.

7. Method according to one of the preceding claims, wherein one or more barriers (60, 61, 62) are introduced into the rotor mould (50) before it is filled, said barriers optionally remaining in the cured rotor compound.

8. Rotor for a synchronous reluctance machine, wherein the rotor consists of a magnetically non-conductive, prepolymeric or polymeric base compound which is interspersed with magnetically conductive particles (10), **characterized in that** the rotor is produced by a method according to one of Claims 1 to 7.

9. Rotor according to Claim 8, **characterized in that** the base compound is a thermoplastic or a thermoset, for example a resin, and one or more particles consist of iron or iron-containing material.

10. Rotor according to Claim 9, **characterized in that** the particles (10) are insulated in the longitudinal direction and not insulated at their end boundary surfaces (20).

**Revendications**

1. Procédé de fabrication d'un rotor pour une machine à reluctance synchrone, dans lequel, dans une première étape, une masse primaire prépolymère ou polymère, magnétiquement non conductrice, est mélangée avec des particules magnétiquement conductrices (10), et dans une deuxième étape, les particules (10) sont alignées par l'application d'un champ magnétique afin de produire au moins une paire de pôles magnétiques, dans lequel, avant l'application du champ, la masse primaire ainsi que les particules (10) sont versées dans un moule à rotor (50), en particulier dans un moule à rotor (50) cylindrique ou angulaire, dans lequel au moins une pièce factice ou le futur arbre moteur (70) ou un arbre auxiliaire est introduit(e) dans le moule à rotor (50) avant le remplissage de celui-ci,

**caractérisé en ce qu'**une ou plusieurs particules (10) sont fabriquées à partir d'un fil métallique isolé, dans lequel le fil métallique est découpé en segments de fil métallique, de sorte que des particules (10) à surfaces de coupe non isolées (20) se forment qui sont mélangées à la masse primaire de sorte qu'à l'application du champ magnétique, une ou plusieurs chaînes électriquement conductrices, composées de plusieurs particules (10), se forment.

2. Procédé selon la revendication 1, **caractérisé en ce que** la masse primaire est un thermoplastique ou une résine thermodurcissable.

3. Procédé selon l'une quelconque des revendications précédentes, dans lequel un champ magnétique multipolaire, de préférence avec un nombre pair de pôles, de manière particulièrement préférée avec quatre pôles, est appliqué.

4. Procédé selon la revendication 1, 2 ou 3, dans lequel les chaînes sont alignées de manière isolée les unes par rapport aux autres dans la masse primaire.

5. Procédé selon l'une quelconque des revendications précédentes, dans lequel le fil métallique est découpé en segments de fil métallique ayant un rapport de côtés de $\frac{I}{D} \geq 5$.

6. Procédé selon l'une quelconque des revendications précédentes, dans lequel le processus de durcissement de la masse primaire est stimulé par l'ajout d'un activateur et/ou l'application d'un champ magnétique et/ou l'amenée ou l'évacuation d'énergie sous forme de lumière ou de chaleur.

7. Procédé selon l'une quelconque des revendications précédentes, dans lequel une ou plusieurs barrières (60, 61, 62) sont introduites dans le moule à rotor (50) avant le remplissage de celui-ci et restent dans la masse de rotor durcie, le cas échéant.

8. Rotor pour une machine à reluctance synchrone, dans lequel le rotor est composé d'une masse primaire prépolymère ou polymère, magnétiquement moule de rotor, qui est mélangée à des particules magnétiquement conductrices (10), **caractérisé en ce que** le rotor est fabriqué selon un procédé selon l'une quelconque des revendications 1 à 7.

9. Rotor selon la revendication 8, **caractérisé en ce que** la masse primaire est un thermoplastique ou une résine thermodurcissable, par exemple une résine, et une ou plusieurs particules sont composées de fer ou d'un matériau ferreux.

10. Rotor selon la revendication 9, **caractérisé en ce que** les particules (10) sont isolées dans la direction longitudinale et ne sont pas isolées au niveau des surfaces d'extrémité frontales (20).

# Fig.1

# Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0596353 A2
- JP 2008109800 A
- JP 2002100522 A
- DE 2443281 A1